# EUROPEAN PATENT APPLICATION

(11) **EP 1 820 558 A1**
(43) Date of publication of application: **22.08.2007**
(21) Application number: 07002985.5
(22) Date of filing: 13.02.2007
(51) Int. Cl.: B01D 50/00, B04C 9/00, B04C 5/13, B04C 5/081

(54) **A cyclone separator with internal filter**

(30) Priority: 16.02.2006 IT MI20060291
(71) Applicant: Perillo, Luigi, 23900 Lecco (IT)
(72) Inventor: Perillo, Luigi, 23900 Lecco (IT)
(74) Representative: Marietti, Andrea

(57) **Abstract**

Cyclone separator for the filtration of air containing particulate, dusts or the like, consisting of a hollow cylindrical body (2), at least one inlet port (3) for air that is arranged at the upper portion of said hollow body tangentially thereto, and at least one outlet port (4) for the filtered air, and comprising at least one inner filter (7) associable with said at least one outlet port and a casing (8) being interposed between said hollow body and said inner filter and provided with passages for the fluid communication between said at least one inlet port and said at least one outlet port of said hollow body, characterized in that a chamber with variable cross-section is comprised between the inner surface of said hollow body and the outer surface of said casing.

## Description

The present invention relates to a cyclone separator with a filter being arranged therein.

It is to be noted that by "cyclone separator" is meant herein below a device adapted for filtering the air which passes through it from the presence of dusts, particulate, or particles, or the like, not cited herein. In particular, the principle on which said separator is based is to provide a vortical and helical motion of the dusts entering the cyclone, which allows damping their kinetic energy. Thereby, the heavier particles, which degrade first, are separated from the lighter ones, as they precipitate on the lower side of said cyclone separator.

According to the known prior art, a cyclone separator is composed of a hollow central body having a substantially cylindrical shape and a frustoconical-shaped lower portion. On the upper portion of the cylindrical body two ports are located, for the inflow and outflow of air to be filtered and which has been filtered, respectively. The two ports are provided with a pressure gradient so as to carry out a considerable air flow from the inlet port to that outlet port of the separator. Said pressure gradient is usually achieved via a vacuum pump being in fluid communication with said outlet port for air.

The air entering the separator is introduced in the central body tangentially thereto, so as to promote the formation of a spiral trajectory of the particles within the separator. Practically, the particles follow different trajectories depending on their weight; heavier particles or dusts immediately decelerate and precipitate to the lower portion of the separator, lighter particles can run a longer spiral path, or they can precipitate or continue their travel, borne by air, through the outlet port. It is understood that the more the air exiting the separator is purified from dusts, or particulate, or particles, or other, the better the cyclone separator efficiency will be.

A poor efficiency of the separator may turn out to be particularly harmful in those circumstances where said separators are employed in order to filter air exiting a plant of the type, for example, for the production of power, or the like, not mentioned herein, which could contain potentially environmentally dangerous substances.

In order to solve this drawback, the cyclone separators are equipped with one or more filters being are arranged within the separator body and with a hollow casing for the protection of these filters.

For example in US6887290, the casing protecting the filter is disposed within the central body of the separator, concentrically thereto, and it is provided with air passages of increasing dimensions, from the upper portion to the lower portion of the separator body. Furthermore, the filters are arranged in direct communication with the outlet port of the separator. In this way, the air flow to be filtered which reaches the inside of the separator, before exiting the outlet port, not only undergoes a variation in its spiral trajectory, but it is forced to pass through the passages obtained on the portion of the inner casing and then, subsequently, to pass through, for example, the bag-type, casing-type or pleated cartridge-type filters, thus carrying out a substantial abatement of the borne particles.

These types of cyclone separators, although they perform a better air filtration as compared with the simple separators mentioned above, are not without drawbacks.

In fact, the dusts entering the separator body, even if diverted and decelerated by the presence of the passages obtained on the inner casing and of the filters mounted on the outlet port, are not assisted to accomplish a further course, and then a further deceleration, inside the chamber having a circumference crown shape defined between the casing and the hollow central body of the separator. This chamber has a substantially annular section, given the concentricity between casing and hollow body, with the result that the air flow rate therein does not undergo any variations, remaining practically constant. Instead, the damping of the dusts in their trajectory is due to the fact that the air ports provided on the casing are located mainly on the lower portion than on the rear portion, thus forcing the air flow and the dusts to run a longer trajectory.

It is the object of the present invention to provide a cyclone separator with inner filter and casing, which is able to improve the separation of dusts or particles or similar airborne substances also inside the chamber that is defined between the outer surface of the casing and the inner surface of the hollow central body of the separator.

It is a further object of the present invention to provide a cyclone separator which promotes a better separation and filtering of the airborne particles or dusts also along their spiral trajectory on the outer surface of said casing.

Furthermore, it is an object of the present invention to provide this by means of a simple and inexpensive structure.

These and other objects of the present invention are provided by means of a cyclone separator for filtering air containing particulate, dusts or the like, which consists of a hollow cylindrical body, at least one air inlet port, located at the upper portion of said hollow body tangentially thereto, and at least one outlet port for the filtered air, and comprising at least one inner filter associable to said at least one outlet port and a casing interposed between said hollow body and said inner filter and provided with passages for the fluid communication between said at least one inlet port and said at least one outlet port of said hollow body, characterized in that a chamber with variable cross-section is contained between the inner surface of said hollow body and the outer surface of said casing.

According to a peculiar aspect of the invention, said casing and said hollow body are substantially cylindrical and eccentrically arranged.

Further features and advantages of the present invention will be better understood from the detailed description of one or more preferred, though non-limiting, embodiments of the cyclone separator illustrated in the annexed figures, in which
- Figure 1 is a sectional view of the cyclone separator according to the invention;
- Figure 2 is a sectional top view of the cyclone separator according to Figure 1;

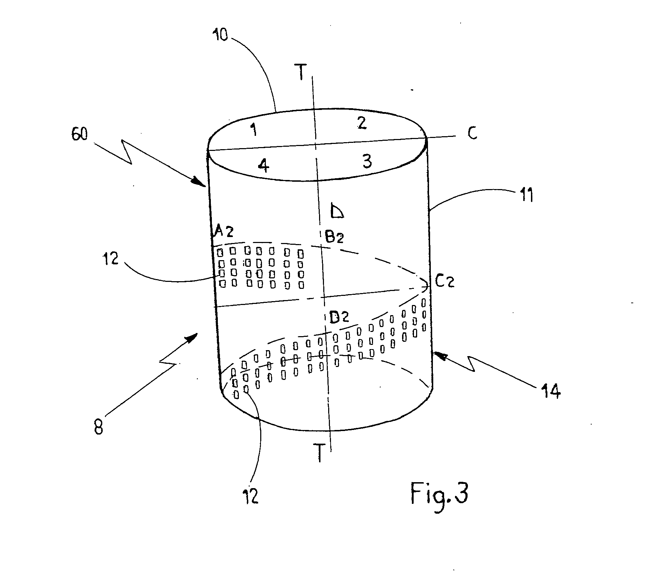

- Figure 3 is a sectional view of the cyclone separator inner casing according to the invention;
- Figure 4 is a sectional longitudinal view of a multiple cyclone separator plant according to the invention;
- Figure 5 is a sectional transversal view of a plant comprising two cyclone separators according to the invention.

With particular reference to such Figures, the generic cyclone separator according to the invention is designated with **1.**

The separator **1** is provided with a hollow central body **2,** having a substantially cylindrical shape, an inlet port **3** for air to be filtered, and an outlet port **4** for the filtered air. According to a preferred embodiment of the cyclone separator **1,** said outlet port **4** has a cylindrical shape and is arranged on the upper surface **5** of said central body **2,** although an optional outlet port **4** placed at the upper portion **13** of the hollow body **2,** laterally thereto (not shown herein), still falls within the scope of protection of the present invention.

The inlet port **3** for air to be filtered is positioned tangentially to the body **2** of said separator **1** so as to force, right from the beginning, the airborne dusts **6** or particles to follow a spiral trajectory within the hollow body **2** of the separator **1.**

Then the separator **1** comprises a series of filters **7,** for example, of the bag-, or casing-type, or of the pleated cartridge-type, located at a given distance one from the other, and in fluid communication with said outlet port **4** for the filtered air. Practically, the air entering said cyclone separator **1,** through the inlet port **3,** is forced to pass through said filters **7** before reaching the outlet port **4.** Dusts or particles **6** having a greater size than those which can pass through the filters **7** get entangled between the filters **7** meshes, or impinge the surface thereof and precipitate towards the lower portion **9** of the separator **1.** A substantially cylindrical-shaped casing **8,** completely covering said filters **7** is provided within said hollow body **2.** The casing **8** is connected to the upper surface **5** of the hollow body **2** from one of its end bases **10** and, moreover, on the side surface **11** of the casing a series of passages **12,** having a substantially annular cross-section, with increasing dimensions from the upper portion **60** to the lower portion **14** of the casing **8** is obtained. Advantageously, said passages **12** are spirally disposed longitudinally to said casing **8** to promote the separation of the particles **6** along their trajectory within the central body **2,** as it will be also understood from the description of the separator **1** operation.

Practically, the casing **8** protects the filters **7** from the direct inflow of air in the body **2,** but also acts as an initial barrier for the dusts or matter particles **6** borne thereby. Furthermore, the increasing dimensions of the passages **12** from the upper portion **60** to the lower one **14** of the casing **8** involve a larger passage of air, i.e. a higher air flow rate, at the lower portion **14** of the casing **8,** as compared with the upper portion **60** of the latter. Thereby, the same airborne particles **6** are forced to follow a longer trajectory, thus being consequently also subjected to a higher deceleration. The heavier particles **6** precipitate to the lower portion of the hollow body **2,** the lighter ones continue their travel, by passing through the passages **12** obtained on the casing **8** until reaching the filters **7.**

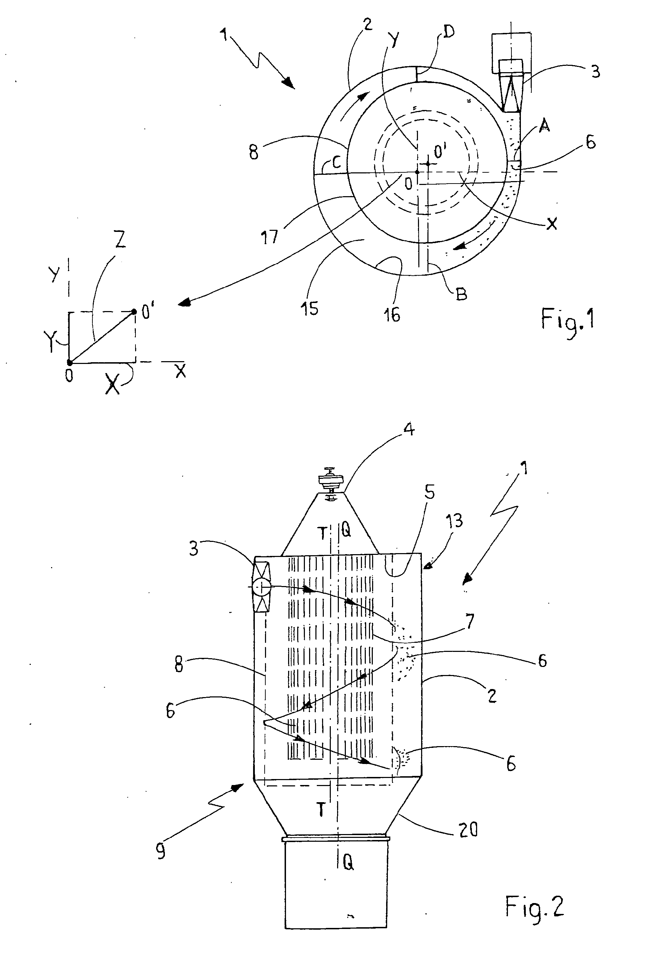

Again, according to the preferred embodiment of the present invention, the filters **7** and the casing **8** are substantially concentric to each other, while having a certain degree of eccentricity to the central body **2.** As shown in Figure 2, the longitudinal axes Q-Q and T-T of the central body **2** and of the casing **8** or of the filters **7,** respectively, are parallel and distinct from each other.

In the preferred embodiment of the present invention, said eccentricity, which can be evaluated by measuring the deviation Z between the centre OR of said central body **2** and the centre OR' of said filters **7** or of said casing **8,** also measurable via the projections X and Y of the distance Z on the axes x and y, results to be about 21 % of the difference value between the diameters of said hollow body **2** and said casing **8.** In particular in the case where the diameter of the hollow body takes the value of 700 mm and that of the casing of 500 mm, the value of the deviation Z would be about 41 mm, while the coordinate X of said distance Z would be about 33 mm and the coordinate Y would be about 25 mm. It is to be noted that the two coordinates X and Y come out to be the least distance Z coordinates on the respective orthogonal axes x and y, integral with said hollow body **2** and having as their origin the centre O of said body **2.**

It is also to be noted that the radial deviation Z of axis T-T relative to axis Q-Q can take a value comprised between 10 and 35% of the difference between the diameters of said hollow body **2** and said casing **8,** without for this departing from the scope of protection of the present invention.

When the air to be filtered enters the central body **2,** through the inlet port **3,** the latter is inside a chamber **15** defined between the inner surface **16** of said hollow body **2** and the outer surface **17** of said casing **8.** Said chamber **15** presents a cross-section gradually varying due to the eccentricity between said hollow body **2** and said casing **8.** It is to be further noted that the eccentricity between the casing **8** and hollow body **2** is such that the inlet section **A** for the air inside the chamber **15** comes out to be among the lowest possible, and moreover said inlet port **3** comes out to be located at the narrowest section of said chamber. Thereby, the air entering the separator **1** immediately undergoes an acceleration, thus increasing the turbulence of the borne particles **6.** Following the particles path inside the chamber **15,** as can be seen in Figure 1, these are subject to a gradual deceleration following the increase in the passage section from section **A** to section **C** of the chamber **15,** passing through section **B.** From section **C** to section **A,** passing through section **D,** the particles **6** are again accelerated following the continuous decrease of the section along the chamber **15.** This continuous acceleration and deceleration cycle, following a helical trajectory along the longitudinal axis of the separator **1,** substantially increases the particles **7** turbulence, which therefore lose part of their kinetic energy.

Thereby, a main portion of the particles **6** entering the chamber **15** are filtered even before they reach the filters **7,** through the passages **12,** thus increasing the life of the same filters **7.**

The particles **6** reaching the filters **7** can either get entangled to the meshes of the filters **7,** or precipitate towards the lower portion **9** of the separator **1.** At said lower portion **9,** the hollow body **2** may comprise a conical length **20** which serves to convey the precipitated particles towards a suitable holding container (not shown herein).

The completely filtered air exits the separator **1** via the outlet port **4,** in fluid communication with said filters **7.**

Moreover, said separator **1** may comprise means **21** for the pressure modulation of air entering the separator (not shown herein) which allow operating said separator **1** at a high head, but at low air flow rates. Said means may comprise a vacuum pump in fluid communication with said outlet port **4,** able to generate a head ranging between 1500 and 3000 mmH₂O and a flow rate ranging between 400 and 1000 m³/h.

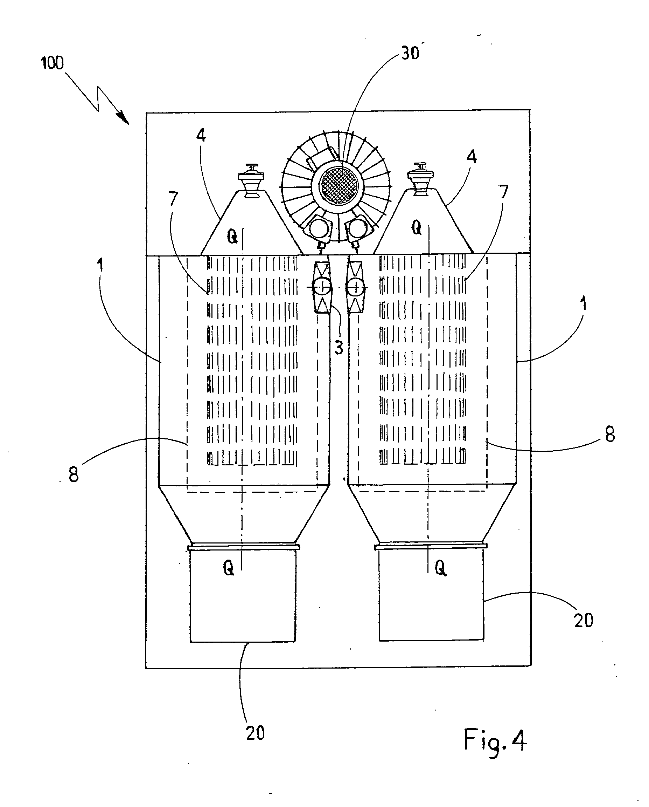

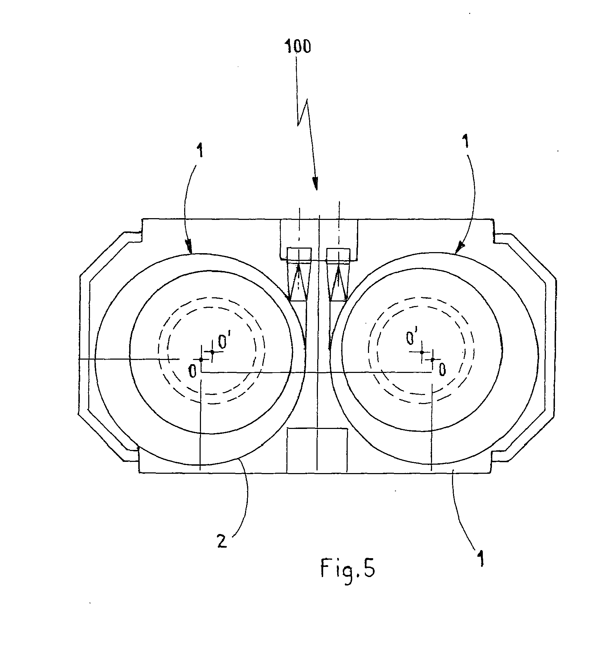

According to the invention, said separators **1** can be coupled to each other (Figures 4 and 5) in parallel or with separators of different types. In such a case, the operation of the filtration plant **100,** consisting in two cyclone separators **1** disposed in parallel, is of the alternating type, i.e. while a first separator **1** carries out a cycle of air filtration from dusts **6,** the second separator **1** carries out a cleaning cycle of the filters **7,** in order to clean them from optional dusts or particles **6** get entangled upon the meshes of the filters **7** during the previous filtration cycle. Said cleaning cycle of the filters **7** can be carried out using known means for air compression (not shown herein) connected to the outlet port **4** of said separators **1** and capable to exert a direct pressure on the filter so as to force the particles get entangled on the meshes of the filters **7** towards the lower portion of the separator **1.**

The passage from the cleaning cycle, to the filtration cycle, and vice versa, between the two cyclone separators **1** can be carried out alternatively in a time interval ranging between 7 and 8 sec.

According to an alternative embodiment of the present invention, the passage from the air filtration cycle to the filter cleaning cycle between the two cyclone separators **1** may occur alternatively when a given pressure differential occurs between the two cyclone separators **1.**

Figures 4 and 5 show a basic filtration plant **100** comprising two separators **1** according to the invention, which operate alternatively in filtering and cleaning to ensure the continuous filtration of air from the inlet duct **30** to the outlet duct (not shown herein) of the plant **100,** both ducts are connected respectively to the inlet **3** and outlet **4** ports of said two separators **1.** Said inlet **3** and outlet **4** ports are provided with suitable valves (not shown herein) which allow or hinder the fluid communication between the inside of the separator **1** and the inlet duct **30** or the outlet duct of the plant **100.**

Finally, it is to be noted that any material can be used for manufacturing the separator, and that, while a particular embodiment of the separator is disclosed herein, as will be understood by those skilled in the art, this embodiment cannot be considered as limiting the present invention, in fact the same casing and the same body can take any forms, as long as they fall within the scope of protection of the present invention.

All the details may be further replaced with other technically equivalent elements.

## Claims

1. A cyclone separator for the filtration of air containing particulate, dusts or the like, consisting of a hollow cylindrical body, at least one inlet port for air that is arranged at the upper portion of said hollow body, tangentially thereto, and at least one outlet port for the filtered air, and comprising at least one inner filter associable with said at least one outlet port and a casing interposed between said hollow body and said inner filter and provided with passages for the fluid communication between said at least one inlet port and said at least one outlet port of said hollow body, **characterized in that** a chamber with variable cross-section is contained between the inner surface of said hollow body and the outer surface of said casing.

2. The cyclone separator according to claim 1, **characterized in that** said casing and said hollow body are substantially cylindrical and eccentrically arranged.

3. The cyclone separator according to claim 2, **characterized in that** the axial deviation between said hollow body and said casing ranges between 10 and 35% of the difference between the diameters of said hollow body and said casing.

4. The cyclone separator according to claims 1 to 3, **characterized in that** said inlet port is arranged at the narrowest section of said chamber, in order to accelerate the air entering the separator.

5. The cyclone separator according to claims 1 to 4, **characterized in that** said passages are spirally arranged, longitudinally to said casing.

6. The cyclone separator according to any preceding claim, **characterized in that** said passages have increasing dimensions from the upper portion to the lower one of said casing.

7. The cyclone separator according to any preceding claim, **characterized in that** said passages have a circular section.

8. The cyclone separator according to any preceding claim, **characterized in that** said at least one filter is a bag- or casing-filter, or a pleated cartridge filter.

9. The cyclone separator according to any preceding claim, **characterized in that** said hollow body comprises a conical length located at the lower portion.

10. The cyclone separator according to any preceding claim, **characterized in that** said outlet port is arranged at the upper portion of said hollow body.

11. The cyclone separator according to any preceding claim, **characterized in that** it comprises means to operate said separator at a high head and at a low flow rate.

12. The cyclone separator according to claim 11, **characterized in that** said means comprise a vacuum pump fluidically connected to said at least one outlet port.

13. The cyclone separator according to claims 11 and 12, **characterized in that** said head ranges between 1500 and 2000 mmH₂O

14. The cyclone separator according to claims 11 to 13, **characterized in that** said flow rate ranges between 400 and 1000 m³/h

15. A method for air filtration by means of a plant for air filtration comprising at least two cyclone separators, of which at least one according to claims 1 to 14, **characterized in that** said at least two separators operate alternatively, for air filtration or for the cleaning of said at least one filter.

16. The method according to claim 15, **characterized in that** said air filtration or cleaning cycles of said at least one filter is carried out alternatively in a time interval of 7-8 sec.

17. The method according to claim 15, **characterized in that** said air filtration or cleaning cycle of at least one filter is carried out alternatively when a given pressure differential intervenes between said at least two cyclone separators.
